# EUROPEAN PATENT SPECIFICATION

(11) **EP 3 614 884 B1**
(45) Date of publication and mention of the grant of the patent: **18.11.2020**
(21) Application number: 18718249.8
(22) Date of filing: 06.04.2018
(51) Int. Cl.: A47B 9/04, F16H 25/20

(54) **A TELESCOPIC COLUMN FOR HEIGHT-ADJUSTABLE FURNITURE**
TELESKOPSÄULE FÜR HÖHENVERSTELLBARE MÖBEL
COLONNE TÉLESCOPIQUE POUR MEUBLES RÉGLABLES EN HAUTEUR

(30) Priority: 24.04.2017 SE 1750481
(43) Date of publication of application: 04.03.2020
(73) Proprietor: Kinnarps AB, 521 88 Kinnarp (SE)
(72) Inventor: HÖGLUND, Per, 554 59 Jönköping (SE)
(74) Representative: Bergenstråhle Group AB
(86) International application number: PCT/SE2018/050360
(87) International publication number: WO 2018/199827

(56) References cited:
- EP-A1- 2 684 488
- DE-C1- 4 426 937

## Description

### Technical field

The present disclosure relates generally to a telescopic column for height-adjustable furniture.

### Background

Height-adjustable furniture may be for example tables in which the height of a table top can be raised or lowered. The table has one or more legs in the shape of telescopic columns, each telescopic column has two or more tube-shaped telescope parts that are arranged so that they are concentric with each other. The table top is arranged onto one end of the telescopic columns. Further, the telescopic column comprises a linear actuator arranged inside the tube-shaped telescope parts, for driving the telescope parts into and out of each other. The linear actuator may be driven by, or include, an electric motor. The linear actuator is arranged and connected to the telescope parts so that they are driven in a first direction out of each other, to lengthen the column thereby increasing the height of the table, or in an opposite direction so that they are driven into each other to shorten the column thereby decreasing the height of the table.

A certain type of such telescopic columns are columns comprising three or more tube-shaped telescope parts: an inner telescope part, a center telescope part and an outer telescope part. Three-part columns are today mainly driven synchronously so that when the telescope parts are driven out of each other from a first position when the column is pushed together as much as possible, the inner telescope part is driven out of the center telescope part with the same pace as the center telescope part is driven out of the outer telescope part, resulting in that when the telescopic column reaches a second position, the inner telescope part has been driven the same distance out of the center telescope part as the center telescope part has been driven out of the outer telescope part, regardless of where this second position is. Such a telescopic column is shown in EP 2641502. Such a driving mechanism results in a synchronous telescopic movement.

However, when a height-adjustable table is in use, it is exposed to mechanical stress, such as from heavy loads arranged onto the table top. The inner telescope part has a smaller diameter than the center telescope part and the outer telescope part, and is therefore weaker than the center telescope part as well as than the outer telescope part, as long as the same telescope part thickness is used for the different telescope parts. As mentioned, when the telescopic movement of a telescopic column is synchronous, the inner telescope part is driven out the same distance of the center telescope part as the center telescope part is driven out of the outer telescope part. As the inner telescope part is weaker than the center telescope part and the outer telescope part, it will be more susceptible to heavy loads than the center telescope part and the outer telescope part. Consequently, it would be advantageous if the telescopic movement of the telescope parts of a telescopic column could be controlled depending on the strength of the involved telescope parts.

Additionally, EP2684488 discloses a linear actuator with two spindles.

### Summary

It is an object of the invention to address at least some of the problems and issues outlined above. It is an object to achieve a telescopic column that is more robust than columns of the prior art even when the same telescope part dimensions are used as for the telescope parts of the prior art column. It is possible to achieve these objects and others by using a telescopic column as defined in the attached independent claims.

According to one aspect, a telescopic column is provided for a height-adjustable furniture, the telescopic column extending along a longitudinal axis from its first end to its second end. The telescopic column comprises a first spindle secured to the first end of the column, the first spindle having a threading, and a tube at least partly enclosing the first spindle, the tube being rotatable by a drive unit, the tube having a first nut threadingly engaged with the threading of the first spindle so that when the tube is rotated, the tube moves along the longitudinal axis in relation to the first spindle, the tube further having a second nut. The telescopic column further comprises a second spindle at least partly arranged inside the tube, the second spindle being threadingly engaged with the second nut of the tube so that when the tube is rotated, the second spindle moves along the longitudinal axis in relation to the tube. The telescopic column further comprises a telescopic housing comprising an inner telescope part fixedly arranged to the second end of the column, a center telescope part connected to the tube, and an outer telescope part fixedly arranged to the first end of the column. The telescopic column further comprises a device that connects the center telescope part to the tube, the device being arranged to the tube and to the center telescope part in such a way that the center telescope part is movable along the longitudinal axis in relation to the tube.

As such a device interconnects the center telescope part with the tube instead of the center telescope part being connected directly to the tube as in prior art, it is possible to drive the center telescope part out of and into the outer telescope part with a different velocity than the tube is driven out of and into the first spindle, which is not possible with prior art telescopic columns. Consequently, the center telescope part can be driven out of and into the outer telescope part with a higher velocity than the inner telescope part is driven out of and into the center telescope part. Hereby, a more robust telescoping is achieved for the three-part telescopic column. According to an embodiment, the device is arranged to the tube and to the center telescope part in such a way that the center telescope part moves faster away from the first end of the telescopic column than the tube when the telescopic column is telescoping from a first compact position to a second extended position.

According to an embodiment, the device is fixedly arranged to the center telescope part and rotatably arranged to the tube, or the device is rotatably arranged to the center telescope part and fixedly arranged to the tube. By arranging the device so that it can rotate in relation either to the tube or to the center telescope part, the center telescope part can be moved in a controlled way along the longitudinal axis in relation to the tube. Also, hereby it is achieved that the rotation of the tube is not transferred into a rotation of the outer telescope part.

According to another embodiment, at least a part of the tube has an outside threading or cam curve, and the device has an inside threading or cam curve engaged with the outside threading or cam curve of the tube so that when the tube is rotated, the device is moved along the longitudinal axis in relation to the tube. By arranging the device with an inside threading or cam curve that is arranged to fit with an outside threading or cam curve of the tube, a good connection is achieve between the sleeve and the tube and a controlled movement of the device along the tube is achieved as the tube rotates in relation to the device, the movement depending on the threading pitch of the threading or cam curve. The device may be a sleeve.

According to another embodiment, the outside threading or cam curve of the tube has an opposite direction to the threading of the first spindle.

According to another embodiment, a thread pitch or cam curve pitch of the outside threading or cam curve of the tube is adapted to cross-sectional dimensions of the inner telescope part and the center telescope part. Hereby, the relation between a distance from a first end of the inner telescope part to a corresponding first end of the center telescope part and a distance from the first end of the center telescope part to a corresponding first end of the outer telescope part at an extended position of the telescopic column could be adapted to the relation of the cross-sectional strength of the inner telescope part to the center telescope part.

According to another embodiment, the device comprises a spring having an extension along the longitudinal axis X-X from its first end to its second end, the first end of the spring being arranged to the center telescope part and the second end of the spring being arranged to the tube. Such a spring would force the center telescope part faster away from the first end of the telescopic column than the tube when the telescopic column is extended from a first compact position to a second extended position.

According to another embodiment, the first spindle is a hollow spindle and the second spindle has a smaller cross-sectional diameter that the first spindle so that the second spindle can be arranged at least partly inside the first spindle.

According to another embodiment, the telescopic column further comprises a rotatable drive shaft non-rotatably but longitudinally movably connected to the tube so that when the drive shaft is rotated, the tube is rotated and moved along the longitudinal axis in relation to the drive shaft.

According to another embodiment, the rotatable drive shaft is arranged inside the first spindle.

According to another embodiment, the rotatable drive shaft is hollow having an inside diameter, and the second spindle has a diameter smaller than the inside diameter of the hollow rotatable drive shaft so that the second spindle can be arranged inside the hollow rotatable drive shaft.

According to another embodiment, the telescopic column further comprises a drive unit arranged to rotate the rotatable drive shaft, the drive unit preferably comprising a motor to which the rotatable drive shaft is connected.

Further possible features and benefits of this solution will become apparent from the detailed description below.

### Brief description of drawings

The solution will now be described in more detail by means of exemplary embodiments and with reference to the accompanying drawings, in which:
Fig. 1 is a perspective view of a linear actuator of a telescopic column according to an embodiment.
Fig. 2 is a perspective view of the linear actuator of fig. 1 in an elongated state.
Fig. 3 is a perspective view of a telescopic column according to an embodiment, the telescopic column being in a compact state.
Fig. 4 is a perspective view of a telescopic column according to an embodiment, the telescopic column being in an elongated state.
Fig. 5 is a perspective close-up view of a part of a telescopic column according to an embodiment.
Fig. 6 is a perspective close-up view of a part of a sleeve according to an embodiment, revealing the inside of the sleeve.
Fig. 7 is a perspective view of a part of a center telescope part according to an embodiment.

### Detailed description

Briefly described, a solution is provided to achieve three-part telescopic columns for height-adjustable furniture that are more robust than prior art three-part telescopic columns. The telescopic column comprises a linear actuator comprising a first spindle, a tube and a second spindle. The linear actuator is arranged so as to synchronously drive the first spindle out of and into the tube and the second spindle out of and into the same tube in the opposite direction of the first spindle. The telescopic column further has a telescopic housing arranged radially outside the linear actuator. The telescopic housing comprises an inner telescope part fixedly arranged to a first end of the telescopic column and an outer telescope part fixedly arranged to a second end of the column distal to the first end. Arranged between the inner telescope part and the outer telescope part is a center telescope part that is connected to the tube of the linear actuator. However, the telescopic column also comprises a device that interconnects the center telescope part with the tube in such a way that the center telescope part is movable along the longitudinal axis in relation to the tube Hereby it is possible to achieve that the center telescope part moves more quickly out of the outer telescope part than the inner telescope part moves out of the center telescope part. Hereby, the telescopic column becomes less susceptible to mechanical stress when it is in its more extended conditions.

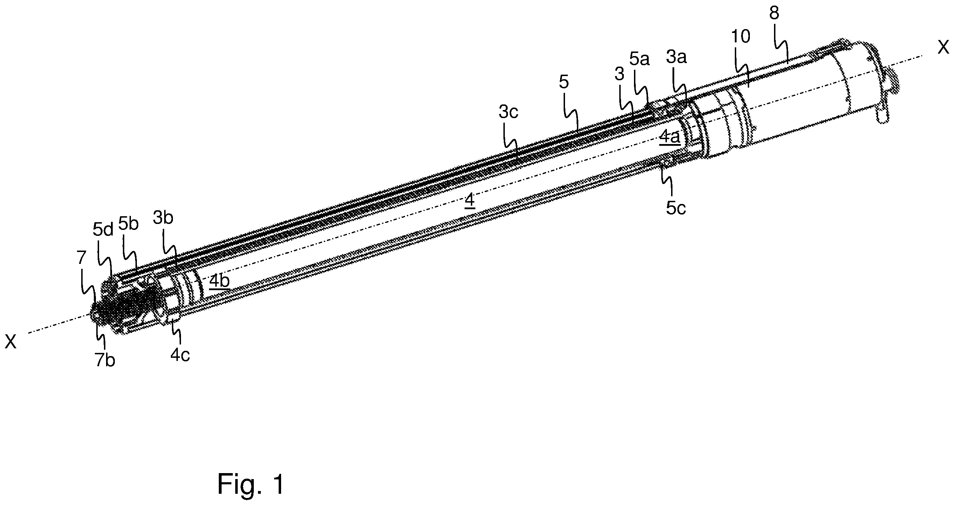

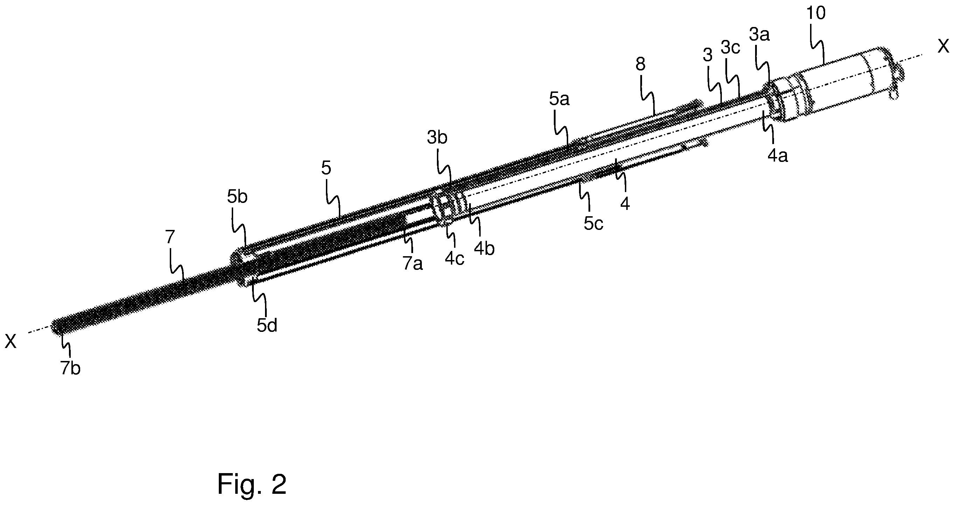

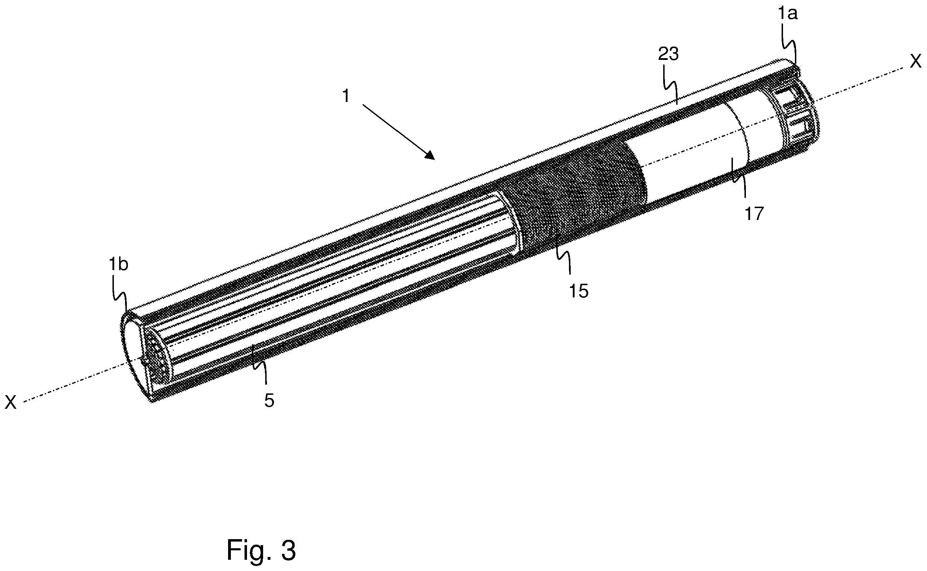

Figures 1 and 2 show a linear actuator of telescopic column according to an embodiment. The linear actuator has an elongate extension along an axis X-X. The linear actuator of fig. 1 and 2 is used for driving inner, center and outer telescope parts 21, 22, 23 (see figs. 3-5) arranged radially outside the linear actuator into and out of each other. In fig. 1 the linear actuator is in a first position when it is pushed together as much as possible. In fig. 2 the linear actuator is in a second, extended position, when it is extended along the axis X-X. The linear actuator has a first spindle 3 securely arranged to a drive unit housing 10 at its first end 3a. The first spindle 3 extends along the axis X-X from its first end 3a to a distal second end 3b. The first spindle 3 has an outside threading 3c extending more or less along its whole length from its first end 3a to its second end 3b. The linear actuator further has a tube 5 that also extends along the axis X-X from its first end 5a to its distal second end 5b. The tube 5 has a larger cross-sectional dimension than the first spindle 3. In other words, the tube 5 is arranged radially outside the first spindle 3. As shown in fig. 1, the first spindle 3 is arranged inside the tube 5 when the linear actuator is in the first position. The tube 5 has a first nut 5c securely arranged at its first end 5a. The first nut 5c is threadingly engaged with the outside threading 3c of the first spindle 3 so that when the tube 5 is rotated, the tube 5 moves along the longitudinal axis X-X in relation to the first spindle 3.

To be able to rotate the tube 5, the linear actuator further has a rotatable drive shaft 4. The rotatable drive shaft 4 has a longitudinal extension along the axis X-X from its first end 4a to its distal second end 4b. The first end of the rotatable drive shaft 4 is connected to a drive unit (not shown) arranged in the drive housing 10. The drive unit comprises a motor and a drive gear. The motor drives the drive gear to rotate, which in turn rotates the drive shaft 4. The second end 4b of the drive shaft 4is non-rotatably connected but longitudinally movably connected to the tube 5 so that when the drive shaft 4 is rotated, the tube 5 is rotated and moved along the longitudinal axis (X-X) in relation to the drive shaft 4. The connection between the drive shaft 4 and the tube 5 is achieved by one or more axial protrusions 4c arranged at the second end 4b of the drive shaft 4, the axial protrusions 4c extending radially outwards in relation to the axis X-X. The axial protrusions 4c co-operates with axial protrusions (not shown) on the inside of the tube 5, extending radially inwards. The axial protrusions on the inside of the tube 5 also extend axially, along more or less the whole length of the tube 5. The first spindle 3 is hollow. The rotatable drive shaft 4 is arranged inside the first spindle 3. I.e. the rotatable drive shaft 4 has a smaller cross-sectional dimension than the inner cross-sectional dimension of the hollow first spindle 3. Other mechanisms for driving the tube 5 to rotate may be used as alternatives to the one described above.

Further, the rotatable drive shaft 4 is hollow for receiving a second spindle 7. The second spindle 7 preferably has an outside threading extending more or less along its whole longitudinal extension. The second spindle 7 is rotatably arranged to a second nut 5d of the tube 5. The second nut 5d is securely arranged to the tube 5 at or close to the second end 5b of the tube 5. The second spindle 7 extends along the axis X-X from its first end 7a (see fig. 2) to its second end 7b distal to the first end. The second end 7b is secured to a foot of the telescopic column. The second spindle 7 may be a massive rod.

The linear actuator has the following function, starting from a first compact position as in fig. 1. As the motor drives the drive shaft 4 to rotate in a first direction, the drive shaft urges the tube 5 to co-rotate via the connection between the axial protrusions 4c of the drive shaft 4 and the axial protrusions (not shown) on the inside of the tube 5. As the tube 5 rotates in the first direction, it will move axially outwardly in relation to the first spindle 3, via the threading connection of the first nut 5c of the tube 5 to the outside threading 3c of the first spindle 3. At the same time, as the tube 5 rotates, its second nut 5d will rotate in the same first direction. As the second nut 5d of the tube 5 is threadingly connected to the second spindle 7, the second spindle 7 will move axially outwardly in relation to the tube 5. The second spindle 7 has an opposite threading direction to the first spindle 3. As a consequence, the second spindle 7 will move axially outwardly from the first spindle 3 faster than the tube 5 moves axially outwardly from the first spindle 3. If the first spindle 3 and the second spindle 7 have the same thread pitch, the second spindle 7 will move axially in relation to the first spindle 3 with double velocity compared to the tube's 5 axial movement in relation to the first spindle 3. When the motor urges the drive shaft 4 to rotate in the opposite direction, the tube 5 will rotate in a second opposite direction from the first direction and as a result, the second spindle 7 and the tube 5 will move axially in relation the first spindle in a retracting direction towards the first position again. The motor, and consequently the movement of the linear actuator is controlled from a not shown control unit.

The linear actuator of figs. 1-2 further has a sleeve 8 securely arranged to the first end 5a of the tube 5. The sleeve 8 is used for connecting the tube 5 to a center telescope part (not shown) to be situated radially outside the sleeve 8. The sleeve and its function will now be further discussed in relation to figs. 3-6.

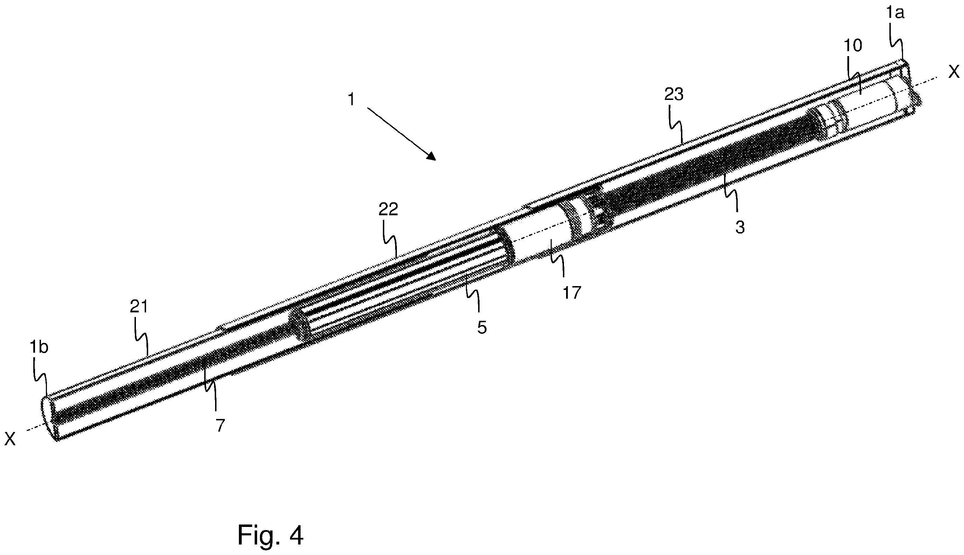

Figs. 3-4 show a telescopic column 1 according to an embodiment of the invention. Fig. 3 shows the telescopic column in a first position when it is pushed together as much as possible. Fig. 4 shows the telescopic column in a second, extended position, when it is extended along the axis X-X. The telescopic column 1 of this embodiment comprises besides a linear actuator such as the one shown in fig. 1 and 2 also a telescopic housing arranged axially outside the linear actuator. The telescopic housing encloses the linear actuator. The telescopic housing comprises an inner telescope part 21, a center telescope part 22 and an outer telescope part 23. The telescopic housing with its inner, center and outer telescope parts 21, 22, 23 is coaxial. The telescope parts 21, 22, 23 are tube-shaped. The inner telescope part 21 has a smaller cross-sectional dimension than the center telescope part 22 that in its turn has a smaller cross-sectional dimension than the outer telescope part 23. The telescope parts 21, 22, 23 are arranged to telescope into and out of each other. The telescopic column 1 has a first end 1a at which the drive unit housing 10 of the linear actuator is arranged, and a distal second end 1b. The outer telescope part 23 is fixedly arranged to the first end 1 a of the column 1. The inner telescope part 21 is fixedly arranged to the second end 1b of the column as well as the second end 7b of the second spindle 7. The inner, center and outer telescope parts 21, 22, 23 are arranged to telescope into and out of each other with the aid of the linear actuator comprising the first spindle 3, the tube 5 and the second spindle 7.

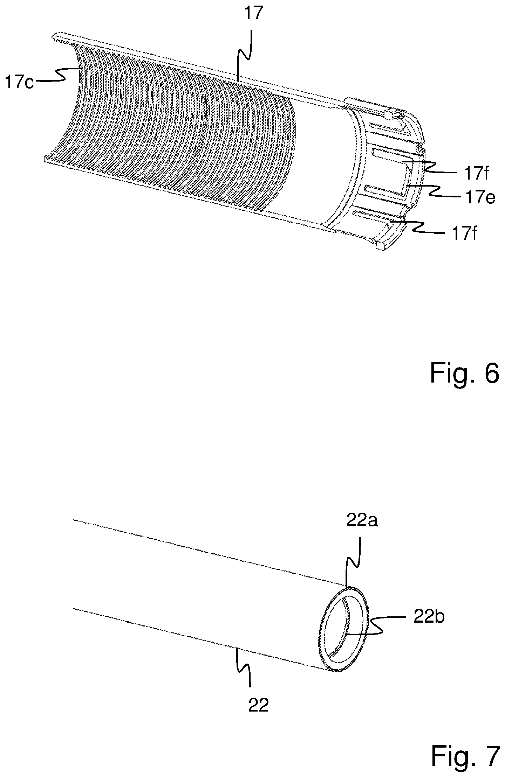

In prior art solutions, such as in EP 2641502, the center telescope part is fixedly arranged to the first end of the tube 5, whereby the center telescope part follows the movement of the tube. In this embodiment of the invention, on the other hand, the center telescope part 22 is fixedly arranged to a device 17 and the device 17 is in its turn connected to the tube 5. The device 17 is in the following embodiment exemplified by a sleeve 17. The sleeve 17 has an inside threading 17c (see fig. 6). Further, a part of the tube 5 has an outside threading 15 (see fig. 3). The outside threading 15 is preferably arranged at a part of the tube 5 closer to the first end 5a than to the second end 5b. The inside threading 17c of the sleeve 17 is arranged to co-operate with the outside threading 15 of the tube 5 so that when the tube 5 is rotated by the drive shaft 4, the sleeve 17 is moved along the longitudinal axis X-X in relation to the tube 5. In other words, as the tube 5 is rotated, the sleeve 17 does not follow the rotational movement of the tube 5 but instead moves along the tube 5 due to the threading connection between the tube 5 and the sleeve 17. As seen in fig. 3, the sleeve 17 is positioned to the right of the main part of the threading 15, whereas in the elongated position in fig. 4 the sleeve 17 has moved onto the threading 15, hereby covering the threading 15. As the center telescope part 22 is securely connected, i.e. fixedly arranged to the sleeve 17, the center telescope part 22 follows the axial movement of the sleeve 17 and consequently moves faster out of the outer telescope part 23 than the tube 5 moves out of the first spindle 3. This means that in the most extended position of the telescopic column, the inner telescope part 21 has moved a shorter distance out of the center telescope part 22 than the center telescope part 22 has moved out of the outer telescope part 23. As the inner telescope part 21 is weaker than the center telescope part 22 and the center telescope part 22 is weaker than the outer telescope part 23, if the same thickness is used for the telescope parts, and as a shorter distance out of its outer telescope part means that the telescope part needs to take up less mechanical stress than the telescope part with longer distance out of its outer telescope part, such a solution can be designed so that the different telescope parts are exposed to mechanical strains corresponding to their mechanical strength. Consequently, by adapting the threading pitch of the sleeve 17 to the mechanical strength of the different telescope parts, or rather by adapting the difference between threading pitch of the sleeve 17 to the threading pitch of the first spindle 3 and the second spindle 7, the center telescope part 22 could be driven out of the outer telescope 23 part at a pace that is proportionally higher than the pace the inner telescope part 21 is driven out of the center telescope part 22, proportional to the difference in mechanical strength between the inner telescope part 21 and the center telescope part 22.

As could be seen in fig. 3, when the telescopic column 1 is in the first pushed-together position, the sleeve 17 is in a position furthest towards the first end 1a of the column. Then the outer threading 15 of the tube 5 is revealed in fig. 3, left of the sleeve 17. Then as the motor rotates the drive shaft 4 so as to extend the telescopic column 1, the tube 5 is rotated and the sleeve 17, which is not rotated, moves onto the outer threading 15 of the tube 5 and hereby moves in the axial direction over the threading 15 of the tube 5 until the column 1 reaches its furthermost extended position in fig. 4 where the sleeve 17 covers the threading 15 of the tube, as seen in fig. 4.

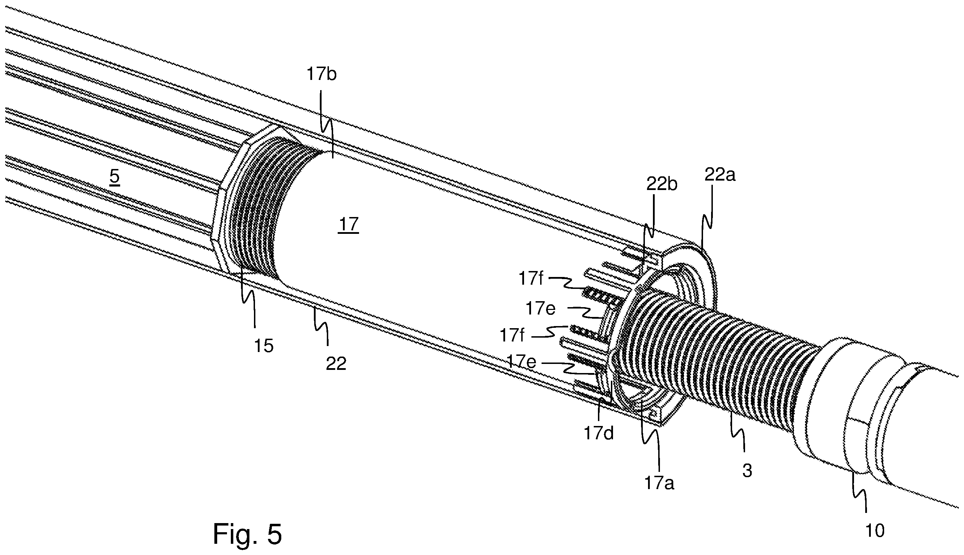

Fig. 5 is a close-up view of the tube 5 with the sleeve 17 attached to the center telescope part 22. The sleeve 17 extends along the longitudinal axis X-X from its first end 17a to its second end 17b. The outer telescope part 23 has been deleted from this figure in order to better show the attachment of the center telescope part 22 to the sleeve 17. The telescopic column is in an extended position but not in the outermost extended position, so the sleeve 17 has moved onto a part of the outer threading 15 of the tube 5. The sleeve 17 further has a first protrusion 17d, preferably ring-shaped, that protrudes radially outwardly. The first protrusion 17d is arranged at the first end 17a. The sleeve 17 further has corresponding second protrusions 17e protruding radially outwardly, situated around the circumference of the sleeve at the same mutual longitudinal position between the first and the second end. The first protrusion 17d and the second protrusions 17e are situated with a distance from each other along the longitudinal axis X-X, which distance corresponds to a longitudinal extension of a corresponding inner protrusion 22b of the center telescope part 22, which here is arranged at a first end 22a of the center telescope part 22 closest to the first end 1a of the telescopic column 1. The center telescope part 22 with its inner protrusion 22b is also shown in fig. 7. The inner protrusion 22b is situated on the inside of the telescope part and protrudes radially inwardly towards the longitudinal axis X-X. The first protrusion 17d and the second protrusions 17e of the sleeve 17 co-operates with the inner protrusion 22b of the center telescope part 22 so that the center telescope part 22 follows the movement of the sleeve 17. The inner protrusion 22b of the center telescope part 22 may be ring-shaped for co-operating with the first and second protrusions 17d, 17e of the sleeve 17. However, other alternative forms may be used, such as a broken ring-shape or one or more individual protrusions having a smaller circumferential extension at one or both of the first and second protrusions 17d, 17e of the sleeve 17 and the inner protrusion 22b of the center telescope part 22. The inner protrusion 22b of the center telescope part 22 is to fit between the first protrusion 17d and the second protrusions 17e of the sleeve 17. The second protrusions 17e are made flexible by the aid of notches 17f in the sleeve. The first and second protrusions 17d, 17e are in this embodiment arranged at the first end 17a of the sleeve 17, closest to the first end 1a of the telescopic column 1. However, other embodiments may be used as well, such as having the first and second protrusions 17d, 17e at a second end 17b of the sleeve or somewhere in between the first and second end 17a, 17b.

Fig. 6 is a perspective view of a part of the sleeve revealing the inside of the sleeve 17 and especially the inner threading 17c of the sleeve.

Fig. 7 shows an embodiment of a part of a center telescope part 22 showing the inner protrusion 22b that is to co-operate with the first and second protrusions 17d, 17e of the sleeve 17. The protrusion 22b is in this embodiment in a broken ring-shaped shape.

According to another embodiment, the device 17 is fixedly arranged to the tube 5 but rotationally arranged to the center telescope part 22 instead of vice versa. In this embodiment, there may for example be a threading inside the center telescope part 22 that co-operates with an outside threading of the device 17.

According to another embodiment, the device 17 comprises a spring having an extension along the longitudinal axis X-X from its first end to its second end. The first end of the spring is arranged to the center telescope part 22 and the second end of the spring is arranged to the tube 5. The spring has its spring force in the direction of the longitudinal axis X-X. The spring may be e.g. a mechanical spring, e.g. a cylindrical spring, or a pneumatic spring. The spring is arranged between the center telescope part 22 and the tube 5 so that it presses the center telescope part away from the tube along the longitudinal axis X-X. Hereby it is achieved that the center telescope part is pressed away from the tube with a higher force when the telescopic column is in a more contracted positon than in a more extended position. As a result, the center telescope part is driven out of the outer telescope part with a higher velocity than the inner telescope part is driven out of the center telescope part.

The spring may be connected with its first end to the center telescope part 22 and with its second end to a sleeve that is rotationally connected to the tube 5. By such a sleeve it is avoided that the spring transfers the rotational movement of the tube onto the center telescope part.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for an apparatus or method to address each and every problem sought to be solved by the presently described concept, for it to be encompassed hereby. In the exemplary figures, a broken line generally signifies that the feature within the broken line is optional.

## Claims

1. A telescopic column (1) for a height-adjustable furniture, the telescopic column extending along a longitudinal axis (X-X) from its first end (1a) to its second end (1b), the telescopic column (1) comprising:
a first spindle (3) secured to the first end (1a) of the column (1), the first spindle (3) having a threading (3c);
a tube (5) at least partly enclosing the first spindle (3), the tube (5) being rotatable by a drive unit, the tube (5) having a first nut (5c) threadingly engaged with the threading (3c) of the first spindle (3) so that when the tube (5) is rotated, the tube moves along the longitudinal axis (X-X) in relation to the first spindle (3), the tube (5) further having a second nut (5d);
a second spindle (7) at least partly arranged inside the tube (5), the second spindle (7) being threadingly engaged with the second nut (5d) of the tube (5) so that when the tube (5) is rotated, the second spindle (7) moves along the longitudinal axis (X-X) in relation to the tube (5), and
a telescopic housing comprising an inner telescope part (21) fixedly arranged to the second end (1b) of the column (1), a center telescope part (22) connected to the tube (5), and an outer telescope part (23) fixedly arranged to the first end (1a) of the column, wherein the telescopic column (1) further comprises a device (17) that connects the center telescope part (22) to the tube (5), the device (17) being arranged to the tube (5) and to the center telescope part (22) in such a way that the center telescope part (22) is movable along the longitudinal axis (X-X) in relation to the tube (5), wherein the device (17) is fixedly arranged to the center telescope part (22) and rotatably arranged to the tube (5), and wherein at least a part of the tube (5) has an outside threading (15) or cam curve, and wherein the device (17) has an inside threading or cam curve engaged with the outside threading (15) or cam curve of the tube (5) so that when the tube (5) is rotated, the device (17) is moved along the longitudinal axis (X-X) in relation to the tube (5).

2. Telescopic column (1) according to claim 1, wherein the outside threading or cam curve of the tube (5) has an opposite direction to the threading (3c) of the first spindle (3).

3. Telescopic column (1) according to any of claims 1 or 2, wherein a thread pitch or cam curve pitch of the outside threading or cam curve of the tube (5) is adapted to cross-sectional dimensions of the inner telescope part (21) and the center telescope part (22).

4. Telescopic column according to any of the preceding claims, wherein the first spindle (3) is a hollow spindle and the second spindle (7) has a smaller cross-sectional diameter that the first spindle (3) so that the second spindle (7) can be arranged at least partly inside the first spindle (3).

5. Telescopic column according to any of the preceding claims, further comprising a rotatable drive shaft (4) non-rotatably but longitudinally movably connected to the tube (5) so that when the drive shaft (4) is rotated, the tube (5) is rotated and moved along the longitudinal axis (X-X) in relation to the drive shaft (4).

6. Telescopic column according to claim 5, wherein the rotatable drive shaft (4) is arranged inside the first spindle (3).

7. Telescopic column according to claim 4 and 6, wherein the rotatable drive shaft (4) is hollow having an inside diameter, and the second spindle (7) has a diameter smaller than the inside diameter of the hollow rotatable drive shaft (4) so that the second spindle (7) can be arranged inside the hollow rotatable drive shaft (4).

8. Telescopic column according to any of claims 5-7, further comprising a drive unit arranged to rotate the rotatable drive shaft (4), the drive unit preferably comprising a motor to which the rotatable drive shaft (4) is connected.

## Patentansprüche

1. Teleskopsäule (1) für ein höhenverstellbares Möbel, wobei sich die Teleskopsäule entlang einer Längsachse (X-X) von ihrem ersten Ende (1a) zu ihrem zweiten Ende (1b) erstreckt, wobei die Teleskopsäule (1) Folgendes umfasst:
eine erste Spindel (3), gesichert an dem ersten Ende (1a) der Säule (1), wobei die erste Spindel (3) ein Gewinde (3c) aufweist;
ein Rohr (5), zumindest teilweise die erste Spindel (3) einschließend, wobei das Rohr (5) durch eine Antriebseinheit drehbar ist, wobei das Rohr (5) eine erste Mutter (5c) aufweist, die im Gewindeeingriff mit dem Gewinde (3c) der ersten Spindel (3) ist, sodass, wenn das Rohr (5) gedreht wird, sich das Rohr entlang der Längsachse (X-X) bezüglich der ersten Spindel (3) bewegt, wobei das Rohr (5) ferner eine zweite Mutter (5d) aufweist;
eine zweite Spindel (7), zumindest teilweise innerhalb des Rohres (5) angeordnet, wobei die zweite Spindel (7) im Gewindeeingriff mit der zweiten Mutter (5d) des Rohres (5) ist, sodass, wenn das Rohr (5) gedreht wird, sich die zweite Spindel (7) entlang der Längsachse (X-X) bezüglich des Rohres (5) bewegt, und
ein Teleskopgehäuse, umfassend einen inneren Teleskopteil (21), fest am zweiten Ende (1b) der Säule (1) angeordnet, einen mittleren Teleskopteil (22), verbunden mit dem Rohr (5), und einen äußeren Teleskopteil (23), fest am ersten Ende (1a) der Säule angeordnet, wobei die Teleskopsäule (1) ferner eine Vorrichtung (17) umfasst, die den mittleren Teleskopteil (22) mit dem Rohr (5) verbindet, wobei die Vorrichtung (17) am Rohr (5) und am mittleren Teleskopteil (22) in einer Weise angeordnet ist, dass der mittlere Teleskopteil (22) entlang der Längsachse (X-X) bezüglich des Rohres (5) bewegbar ist, wobei die Vorrichtung (17) fest am mittleren Teleskopteil (22) angeordnet ist und drehbar am Rohr (5) angeordnet ist, und wobei zumindest ein Teil des Rohres (5) ein Außengewinde (15) oder eine Nockenkurve aufweist und wobei die Vorrichtung (17) ein Innengewinde oder eine Nockenkurve im Eingriff mit dem Außengewinde (15) oder der Nockenkurve des Rohres (5) aufweist, sodass, wenn das Rohr (5) gedreht wird, die Vorrichtung (17) entlang der Längsachse (X-X) bezüglich des Rohres (5) bewegt wird.

2. Teleskopsäule (1) nach Anspruch 1, wobei das Außengewinde oder die Nockenkurve des Rohres (5) eine entgegengesetzte Richtung zum Gewinde (3c) der ersten Spindel (3) aufweist.

3. Teleskopsäule (1) nach einem der Ansprüche 1 oder 2, wobei eine Gewindesteigung oder Nockenkurvensteigung des Außengewindes oder der Nockenkurve des Rohres (5) an Querschnittsabmessungen des inneren Teleskopteils (21) und des mittleren Teleskopteils (22) angepasst ist.

4. Teleskopsäule nach einem der vorhergehenden Ansprüche, wobei die erste Spindel (3) eine Hohlspindel ist und die zweite Spindel (7) einen kleineren Querschnittsdurchmesser als die erste Spindel (3) hat, sodass die zweite Spindel (7) zumindest teilweise im Inneren der ersten Spindel (3) angeordnet sein kann.

5. Teleskopsäule nach einem der vorhergehenden Ansprüche, ferner umfassend eine drehbare Antriebswelle (4) nicht-drehbar aber längs bewegbar mit dem Rohr (5) verbunden, sodass, denn die Antriebswelle (4) gedreht wird, das Rohr (5) gedreht und entlang der Längsachse (X-X) bezüglich der Antriebswelle (4) bewegt wird.

6. Teleskopsäule nach Anspruch 5, wobei die drehbare Antriebswelle (4) im Inneren der ersten Spindel (3) angeordnet ist.

7. Teleskopsäule nach Anspruch 4 und 6, wobei die drehbare Antriebswelle (4) hohl ist und einen Innendurchmesser aufweist und wobei die zweite Spindel (7) einen Durchmesser aufweist, der kleiner als der Innendurchmesser der hohlen drehbaren Antriebswelle (4) ist, sodass die zweite Spindel (7) im Inneren der hohlen drehbaren Antriebswelle (4) angeordnet sein kann.

8. Teleskopsäule nach einem der Ansprüche 5-7, ferner umfassend eine Antriebseinheit, angeordnet zum Drehen der drehbaren Antriebswelle (4), wobei die Antriebseinheit vorzugsweise einen Motor umfasst, mit dem die drehbare Antriebswelle (4) verbunden ist.

## Revendications

1. Colonne télescopique (1) pour un meuble réglable en hauteur, la colonne télescopique s'étendant le long d'un axe longitudinal (X-X) de sa première extrémité (la) à sa seconde extrémité (1b), la colonne télescopique (1) comprenant :
une première broche (3) fixée à la première extrémité (la) de la colonne (1), la première broche (3) ayant un filetage (3c) ;
un tube (5) enfermant au moins partiellement la première broche (3), le tube (5) pouvant être mis en rotation par une unité d'entraînement, le tube (5) ayant un premier écrou (5c) mis en prise par filetage par le filetage (3c) de la première broche (3) de sorte que lorsque le tube (5) est mis en rotation, le tube se déplace le long de l'axe longitudinal (X-X) par rapport à la première broche (3), le tube (5) ayant en outre un second écrou (5d) ;
une seconde broche (7) disposée au moins partiellement à l'intérieur du tube (5), la seconde broche (7) étant mise en prise par filetage par le second écrou (5d) du tube (5) de sorte que lorsque le tube (5) est mis en rotation, la seconde broche (7) se déplace le long de l'axe longitudinal (X-X) par rapport au tube (5), et
un boîtier télescopique comprenant une partie intérieure de télescope (21) disposée de manière fixe sur la seconde extrémité (1b) de la colonne (1), une partie centrale de télescope (22) reliée au tube (5), et une partie extérieure de télescope (23) disposée de manière fixe sur la première extrémité (1a) de la colonne, la colonne télescopique (1) comprenant en outre un dispositif (17) qui relie la partie centrale de télescope (22) au tube (5), le dispositif (17) étant disposé sur le tube (5) et sur la partie centrale de télescope (22) de sorte que la partie centrale de télescope (22) soit mobile le long de l'axe longitudinal (X-X) par rapport au tube (5), le dispositif (17) étant disposé de manière fixe sur la partie centrale de télescope (22) et disposé de manière rotative sur le tube (5), et au moins une partie du tube (5) ayant un filetage extérieur (15) ou une courbe de came, et le dispositif (17) ayant un filetage intérieur ou une courbe de came en prise avec le filetage extérieur (15) ou la courbe de came du tube (5) de sorte que lorsque le tube (5) est mis en rotation, le dispositif (17) soit déplacé le long de l'axe longitudinal (X-X) par rapport au tube (5).

2. Colonne télescopique (1) selon la revendication 1, le filetage extérieur ou la courbe de came du tube (5) ayant une direction opposée au filetage (3c) de la première broche (3).

3. Colonne télescopique (1) selon l'une quelconque des revendications 1 et 2, un pas de filetage ou une courbe de came du filetage extérieur ou une courbe de came du tube (5) étant adapté(e) aux dimensions de la section transversale de la partie intérieure de télescope (21) et de la partie centrale de télescope (22).

4. Colonne télescopique selon l'une quelconque des revendications précédentes, la première broche (3) étant une broche creuse et la seconde broche (7) ayant un diamètre de section transversale plus petit que la première broche (3) de sorte que la seconde broche (7) puisse être disposée au moins partiellement à l'intérieur de la première broche (3).

5. Colonne télescopique selon l'une quelconque des revendications précédentes, comprenant en outre un arbre d'entraînement rotatif (4) relié au tube (5) de manière non rotative mais mobile longitudinalement, de sorte que lorsque l'arbre d'entraînement (4) est mis en rotation, le tube (5) soit mis en rotation et déplacé le long de l'axe longitudinal (X-X) par rapport à l'arbre d'entraînement (4).

6. Colonne télescopique selon la revendication 5, l'arbre d'entraînement rotatif (4) étant disposé à l'intérieur de la première broche (3).

7. Colonne télescopique selon les revendications 4 et 6, l'arbre d'entraînement rotatif (4) étant creux et ayant un diamètre intérieur, et la seconde broche (7) ayant un diamètre inférieur au diamètre intérieur de l'arbre d'entraînement rotatif creux (4) de sorte que la seconde broche (7) puisse être disposée à l'intérieur de l'arbre d'entraînement rotatif creux (4).

8. Colonne télescopique selon l'une quelconque des revendications 5 à 7, comprenant en outre une unité d'entraînement conçue pour mettre en rotation l'arbre d'entraînement rotatif (4), l'unité d'entraînement comprenant de préférence un moteur auquel l'arbre d'entraînement rotatif (4) est relié.
